(19) **Europäisches Patentamt**
**European Patent Office**
**Office européen des brevets**

(11) **EP 4 491 666 A1**

(12) **EUROPEAN PATENT APPLICATION**

(43) Date of publication:
**15.01.2025 Bulletin 2025/03**

(21) Application number: **23184501.7**

(22) Date of filing: **10.07.2023**

(51) International Patent Classification (IPC):
**C08K 5/3492** (2006.01)    **C08L 23/12** (2006.01)

(52) Cooperative Patent Classification (CPC):
(C-Sets available)
**C08L 23/12;** C08K 2201/019; C08L 2205/035;
C08L 2207/02                                        (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventors:
• **KRALICEK, Markus**
**4021 Linz (AT)**

• **GITSAS, Antonio**
**4021 Linz (AT)**
• **COSTA, Francis Reny**
**4021 Linz (AT)**
• **STOCKREITER, Wolfgang**
**4021 Linz (AT)**
• **SCHÜTZ, Florian**
**1020 Vienna (AT)**

(74) Representative: **Kador & Partner Part mbB**
**Corneliusstraße 15**
**80469 München (DE)**

(54) **FLAME RETARDANT POLYPROPYLENE COMPOSITIONS WITH LASER-WELDING CAPABILITY**

(57)    The invention concerns a flame retardant polypropylene composition comprising a) a first heterophasic propylene copolymer in an amount of 15.0 to 35.0 wt.% based on the total weight of the flame retardant polypropylene composition, b) a second heterophasic propylene copolymer in an amount of 10.0 to 30.0 wt.% based on the total weight of the flame retardant polypropylene composition, and c) a nitrogen-containing flame retardant in an amount of 10.0 to 40.0 wt.% based on the total weight of the flame retardant polypropylene composition, wherein the second heterophasic propylene copolymer has a higher melt flow rate MFR$_2$ (230°C, 2.16 kg) determined according to ISO 1133 than the first heterophasic propylene copolymer.

**EP 4 491 666 A1**

(52) Cooperative Patent Classification (CPC): (Cont.)

C-Sets
**C08L 23/12, C08L 23/16, C08L 23/12, C08L 23/16,
C08L 23/12, C08L 23/16, C08L 51/06,
C08K 5/3492, C08K 7/14, C08K 5/49;
C08L 23/12, C08L 23/16, C08L 23/12, C08L 23/16,
C08L 23/12, C08L 23/16, C08L 51/06,
C08K 5/34922, C08K 7/14, C08K 5/49;
C08L 23/12, C08L 23/16, C08L 23/12, C08L 23/16,
C08L 53/00, C08L 51/06, C08K 5/34928,
C08K 7/14, C08K 5/49**

**Description**

The present invention is related to a flame retardant polypropylene composition, optionally comprising glass fibers, with laser-welding capability and an article comprising the flame retardant polypropylene composition.

Components for electric applications related in particular to e-mobility as well as stationary devices made traditionally of metal and plastic parts, require assembly using mechanical fixtures, such as screws or wrapping, or chemical fixtures, such as glue. This is adding additional complexity, weight, and costs to the whole construction. In particular in cases where not adequate space is available, additional components need to be avoided.

In a hot plate welding, an ultrasonic welding, and a vibration molding among welding methods, there is a possible damage to a product due to heat, vibration, and others. It is also known in the art to join together two molded parts made from polymer resins where one part (the "transparent" part) is at least partially transparent to a laser beam at a given wavelength and the other part absorbs a significant portion of incident light at that wavelength (the "opaque" or non-transparent part), by positioning them to contact along adjoining surfaces, irradiating the surface of the transparent part with a laser beam at the given wavelength such that at least a portion of the laser energy is transmitted to the junction of the transparent and opaque parts, causing the polymer at the junction of the two parts to be melted and joined together. This technique is commonly referred to as laser welding. A bonding or joining method by laser welding has no damage to a product due to heat or vibration involved in the welding, and the welding process is also very simple. Thus, recently the laser welding method has been widely utilized and has attracted the attention as a welding manner for various resin components or parts.

Last but not least, the increasing need for components for electric applications in terms of fire safety and therefore the necessity of incorporating flame-retardant materials is adding additional challenges to the developments.

In the state of the art, the proposed solutions are often using either polymer matrices other than polyolefins and/or flame retardants containing halogens, or not containing flame retardants at all.

It is therefore an object of the invention to provide a flame retardant polypropylene composition which contains only low amounts of halogens or which is preferably even free of halogens.

It is a further object of the invention to provide a flame retardant polypropylene composition suitable for laser welding and containing only low amounts of halogens or preferably being free of halogens.

A further object of the invention is to provide a flame retardant polypropylene composition suitable for laser welding and containing only low amounts of halogens or preferably being free of halogens and at the same time having improved mechanical strength.

It has been surprisingly found that the aforementioned objects can be achieved by the flame retardant polypropylene composition according to the invention.

The invention thus provides a flame retardant polypropylene composition comprising, or consisting of,

a) a first heterophasic propylene copolymer in an amount of 15.0 to 35.0 wt.% based on the total weight of the flame retardant polypropylene composition,

b) a second heterophasic propylene copolymer in an amount of 10.0 to 30.0 wt.% based on the total weight of the flame retardant polypropylene composition,

c) a nitrogen-containing flame retardant in an amount of 10.0 to 40.0 wt.% based on the total weight of the flame retardant polypropylene composition,

wherein the second heterophasic propylene copolymer b) has a higher melt flow rate $MFR_2$ (230°C, 2.16 kg) determined according to ISO 1133 than the first heterophasic propylene copolymer a).

Preferably, the amounts of the first heterophasic propylene copolymer a), the second heterophasic propylene copolymer b) and the nitrogen-containing flame retardant c) make up at least 90 wt.% of the flame retardant polypropylene composition, more preferably sum up to 100 wt.%.

The flame retardant polypropylene composition according to the invention comprises a first heterophasic propylene copolymer a) and a second heterophasic propylene copolymer b). The first heterophasic propylene copolymer a) is different from the second heterophasic propylene copolymer b), in particular the second heterophasic propylene copolymer b) has a higher melt flow rate $MFR_2$ (230°C, 2.16 kg) determined according to ISO 1133 than the first heterophasic propylene copolymer a).

Preferably, the first heterophasic propylene copolymer a) has a melt flow rate $MFR_2$ (230°C, 2.16 kg) of from 0.5 to 60 g/10 min, more preferably 5 to 58 g/10 min, more preferably 20 to 56 g/10 min, and most preferably 45 to 55 g/10 min determined according to ISO 1133 and/or a density of from 0.880 to 0.910 g/cm$^3$, preferably 0.890 to 0.910 g/cm$^3$, and most preferably 0.900 to 0.907 g/cm$^3$ determined according to ISO 1183.

Preferably, the second heterophasic propylene copolymer b) has a melt flow rate $MFR_2$ (230°C, 2.16 kg) of from 65 to 120 g/10 min, more preferably 70 to 115 g/10 min, even more preferably 75 to 110 g/10 min, and most preferably 80 to 105 g/10 min determined according to ISO 1133 and/or a density of from 0.880 to 0.910 g/cm$^3$, more preferably 0.890 to 0.910 g/cm$^3$, and most preferably 0.900 to 0.907 g/cm$^3$ determined according to ISO 1183.

Each of the first and second heterophasic propylene copolymer comprises, or consists of, a matrix and an elastomer dispersed within the matrix. The description below pertains to both the first heterophasic propylene copolymer a) and second heterophasic propylene copolymer b).

Preferably, the matrix comprises, or consists of, a polypropylene homopolymer or a polypropylene random copolymer and/or the elastomer comprises, or consists of, a copolymer of propylene and ethylene and/or a C4 to C8 alpha-olefin, more preferably the matrix comprises, or consists of, a polypropylene homopolymer or a polypropylene random copolymer and/or the elastomer comprises, or consists of, a copolymer of propylene and ethylene.

For the purpose of the present invention, the expression "propylene homopolymer" refers to a polypropylene that consists substantially, i.e. of at least 97 mol%, preferably of at least 98 mol%, more preferably of at least 99 mol%, most preferably of at least 99.8 mol% of propylene units. In a preferred embodiment only propylene units in the propylene homopolymer are detectable.

Preferably, the first heterophasic propylene copolymer a) has an ethylene content of from 7.0 to 13.0 wt.%, more preferably 7.5 to 12.5 wt.%, even more preferably 8.5 to 12.0 wt.%, most preferably 9.0 to 11.0 wt.%, based on the total weight of the first heterophasic propylene copolymer and/or wherein the second heterophasic propylene copolymer b) has an ethylene content of from 8.0 to 12.0 wt.%, more preferably 8.5 to 11.5 wt.%, even more preferably 8.5 to 11.0 wt.%, based on the total weight of the second heterophasic propylene copolymer.

Generally in the present invention, the expression "heterophasic" indicates that the elastomer is (finely) dispersed in the matrix. In other words the elastomer forms inclusion in the matrix. Thus, the matrix contains (finely) dispersed inclusions being not part of the matrix and said inclusions contain the elastomer. The term "inclusion" according to this invention shall preferably indicate that the matrix and the inclusion form different phases within the heterophasic polypropylene, said inclusions are for instance visible by high resolution microscopy, like electron microscopy or scanning force microscopy.

Heterophasic propylene copolymers are generally featured by a xylene cold soluble (XCS) fraction and a xylene cold insoluble (XCI) fraction. For the purpose of the present application, the xylene cold soluble (XCS) fraction of the heterophasic propylene copolymers is essentially identical with the elastomer of said heterophasic propylene copolymers.

Accordingly when talking about the intrinsic viscosity and the ethylene content of the elastomer of the heterophasic propylene copolymers the intrinsic viscosity and the ethylene content of the xylene cold soluble (XCS) fraction of said heterophasic propylene copolymers is meant.

Accordingly, the matrix content, i.e. the xylene cold insoluble (XCI) content, in the heterophasic propylene copolymer is preferably in the range of 75.0 to 93.0 wt.%, and most preferably in the range of 77.0 to 91.0 wt. % based on the total weight of the heterophasic propylene copolymer.

The elastomer, i.e. the xylene cold soluble (XCS) content, in the heterophasic propylene copolymer is preferably in the range of 7.0 to 25.0 wt.%, and most preferably in the range of 9.0 to 23.0 wt.%, based on the total weight of the heterophasic propylene copolymer.

Preferably, the intrinsic viscosity (IV) of the xylene cold soluble (XCS) fraction of the first heterophasic propylene copolymer a) and the second heterophasic propylene copolymer b) is rather low. Accordingly, the intrinsic viscosity of the xylene cold soluble (XCS) fraction of the first heterophasic propylene copolymer a) and/or the second heterophasic propylene copolymer b) is below 3.5 dl/g, more preferably not more than 3.4 dl/g. Even more preferred, the intrinsic viscosity of the xylene cold soluble (XCS) fraction of the first heterophasic propylene copolymer a) and/or the second heterophasic propylene copolymer b) is in the range of 1.8 to below 3.5 dl/g, more preferably in the range 1.9 to 3.4 dl/g, like 2.0 to 3.4 dl/g.

The first component of the first heterophasic propylene copolymer a) and the second heterophasic propylene copolymer b) is the matrix. Polypropylenes suitable for use as matrix may include any type of isotactic or predominantly isotactic polypropylene homopolymer or random copolymer known in the art. Thus, the polypropylene may be a propylene homopolymer or an isotactic random copolymer of propylene with ethylene and/or C4 to C8 alpha-olefins, such as for example 1-butene, 1-hexene or 1-octene, wherein the total comonomer content ranges from 0.05 to 10 wt.%.

Preferably, the matrix of the first heterophasic propylene copolymer a) has a melt flow rate MFR$_2$ (230°C, 2.16 kg) determined according to ISO1133 of in a range of 15.0 to 320.0 g/10 min, more preferably of 50.0 to 300.0 g/10 min, still more preferably of 125.0 to 280.0 g/10 min, like in the range of 180.0 to 260.0 g/10 min.

Preferably, the matrix of the second heterophasic propylene copolymer b) has a melt flow rate MFR$_2$ (230°C, 2.16 kg) determined according to ISO1133 of in a range of 15.0 to 800.0 g/10 min, more preferably of 50.0 to 700.0 g/10 min, still more preferably of 150.0 to 600.0 g/10 min, like in the range of 250.0 to 550.0 g/10 min.

Furthermore, the matrix can be multimodal or bimodal in view of the molecular weight.

The expression "multimodal" or "bimodal" used throughout the present invention refers to the modality of the polymer, i.e. the form of its molecular weight distribution curve, which is the graph of the molecular weight fraction as a function of its molecular weight, and/or the form of its comonomer content distribution curve, which is the graph of the comonomer content as a function of the molecular weight of the polymer fractions.

However, it is preferred that the matrix is not multimodal or bimodal.

The second component of the first heterophasic propylene copolymer a) and the second heterophasic propylene copolymer b) is the elastomer. The elastomer comprises, preferably consists of, (i) propylene and (ii) ethylene and/or at least another C4 to C8 α-olefin, more preferably (i) propylene and (ii) ethylene and at least another α-olefin selected form the group consisting of 1-butene, 1-pentene, 1-hexene, 1-heptene and 1-octene. The elastomer may additionally contain units derived from a conjugated diene, like butadiene, or a non-conjugated diene, however it is preferred that the elastomeric copolymer consists of (i) propylene and (ii) ethylene and/or C4 to C8 α-olefins only. Suitable non-conjugated dienes, if used, include straight-chain and branched-chain acyclic dienes, such as 1,4-hexadiene, 1,5-hexadiene, 1,6-octadiene, 5-methyl-1, 4-hexadiene, 3,7-dimethyl-1,6-octadiene, 3,7-dimethyl-1,7-octadiene, and the mixed isomers of dihydromyrcene and dihydro-ocimene, and single ring alicyclic dienes such as 1,4-cyclohexadiene, 1,5-cyclooctadiene, 1,5-cyclododecadiene, 4-vinyl cyclohexene, 1-allyl-4-isopropylidene cyclohexane, 3-allyl cyclopentene, 4-cyclohexene and 1-isopropenyl-4-(4-butenyl) cyclohexane. Multi-ring alicyclic fused and bridged ring dienes are also suitable including tetrahydroindene, methyltetrahydroindene, dicyclopentadiene, bicyclo (2,2,1) hepta-2,5-diene, 2-methyl bicycloheptadiene, and alkenyl, alkylidene, cycloalkenyl and cycloalkylidene norbornenes, such as 5-methylene-2-norbornene, 5-isopropylidene norbornene, 5-(4-cyclopentenyl)-2-norbornene; and 5-cyclohexylidene-2-norbornene. Preferred non-conjugated dienes are 5-ethylidene-2-norbornene, 1,4-hexadiene and dicyclopentadiene.

Accordingly, the elastomer preferably comprises at least propylene and ethylene and may comprise other units derivable from a further α-olefin as defined in the previous paragraph. However, it is in particular preferred that elastomer comprises units only derivable from propylene and ethylene and optionally a conjugated diene, like butadiene, or a non-conjugated diene as defined in the previous paragraph, like 1,4-hexadiene. Thus, an ethylene propylene non-conjugated diene monomer polymer (EPDM) and/or an ethylene propylene rubber (EPR) as elastomer is especially preferred, the latter most preferred.

Like the matrix, the elastomer can be unimodal or multimodal, like bimodal. Concerning the definition of unimodal and multimodal, like bimodal, it is referred to the definition above.

The first heterophasic propylene copolymer a) and/or the second heterophasic propylene copolymer b) can be produced by blending the matrix and the elastomer. However, it is preferred that the first heterophasic propylene copolymer a) and/or the second heterophasic propylene copolymer b) is produced in a sequential step process, using reactors in serial configuration and operating at different reaction conditions. As a consequence, each fraction prepared in a specific reactor may have its own molecular weight distribution and/or comonomer content distribution. The following description pertains both to the first heterophasic propylene copolymer a) and the second heterophasic propylene copolymer b).

The heterophasic propylene copolymer is preferably produced in a sequential polymerization process, i.e. in a multistage process, known in the art, wherein the (semi)crystalline propylene polymer is produced at least in one slurry reactor, preferably in a slurry reactor and optionally in a subsequent gas phase reactor, and subsequently the elastomer is produced at least in one, i.e. one or two, gas phase reactor(s).

Accordingly, it is preferred that the heterophasic propylene copolymer is produced in a sequential polymerization process comprising the steps of (a) polymerizing propylene and optionally at least one ethylene and/or C4 to C8 α-olefin in a first reactor obtaining the first polypropylene fraction of the matrix (M), preferably said first polypropylene fraction is a propylene homopolymer, (b) optionally transferring the first polypropylene fraction into a second reactor (R2), (c) optionally polymerizing in the second reactor and in the presence of said first polypropylene fraction propylene and optionally at least one ethylene and/or C4 to C8 α-olefin obtaining thereby a second polypropylene fraction, preferably said second polypropylene fraction is a second propylene homopolymer, said first polypropylene fraction and optionally said second polypropylene fraction form the matrix, i.e. the matrix of the heterophasic propylene copolymer, (d) transferring the matrix of step (c) into a third reactor, (e) polymerizing in the third reactor and in the presence of the matrix obtained in step (a) or (c) propylene and ethylene, optionally transferring the polymer obtained in the third reactor to a fourth reactor and polymerizing in the fourth reactor and in the presence of polymer obtained in the third reactor propylene and ethylene, to obtain the elastomer dispersed in the matrix, the matrix and the elastomer form the heterophasic propylene copolymer.

It is preferred that the heterophasic propylene copolymer is prepared in the presence of a Ziegler-Natta catalyst comprising compounds (TC) of a transition metal of Group 4 to 6 of IUPAC, a Group 2 metal compound (MC) and an internal donor (ID); optionally a co-catalyst (Co), and optionally an external donor (ED).

This Ziegler-Natta catalyst can be any stereospecific Ziegler-Natta catalyst for propylene polymerization, which preferably is capable of catalyzing the polymerization and copolymerization of propylene and optional comonomers at a pressure of 500 to 10000 kPa, in particular 2500 to 8000 kPa, and at a temperature of 40 to 110°C, in particular of 60 to 110°C.

Preferably, the Ziegler-Natta catalyst comprises a high-yield Ziegler-Natta type catalyst including an internal donor component, which can be used at high polymerization temperatures of 80°C or more. Such high-yield Ziegler-Natta catalyst can comprise a succinate, a diether, a citraconate, a phthalate etc., or mixtures therefrom as internal donor (ID).

The flame retardant polypropylene composition according to the invention comprises a nitrogen-containing flame retardant c).

Preferably, the nitrogen-containing flame retardant is present in an amount of 15.0 to 35.0 wt.%, more preferably 20.0 to 30.0 wt.%, and most preferably 22.0 to 26.0 wt.%, based on the total weight of the flame retardant polypropylene composition.

Preferably, the nitrogen-containing flame retardant is free of halogens. In other words, it is preferred that the nitrogen-containing flame retardant does not contain any organic or inorganic compounds containing halogen atoms. As used herein, the term "halogen" refers to the elements of group 17 of the periodic table.

Preferably, the nitrogen-containing flame retardant comprises at least one nitrogen-containing phosphate, preferably at least one organic nitrogen-containing phosphate. Preferably, the nitrogen-containing flame retardant or the organic nitrogen-containing phosphate comprises or is a phosphate of heterocyclic $C_3$-$C_6$-, more preferably $C_3$-$C_4$-alkyl or -aryl compounds comprising at least one N-atom.

Preferably, the nitrogen-containing flame retardant comprises a first nitrogen-containing phosphate and a second nitrogen-containing phosphate different from the first nitrogen-containing phosphate.

Preferably, the first nitrogen-containing phosphate and the second nitrogen-containing phosphate are organic nitrogen-containing phosphates. It is especially preferred that the first nitrogen-containing phosphate and the second nitrogen-containing phosphate are phosphates of heterocyclic $C_3$-$C_6$-, more preferably $C_3$-$C_4$-alkyl or -aryl compounds comprising at least one N-atom.

It is preferred that the first nitrogen-containing phosphate is an organic nitrogen-containing polyphosphate. More preferably, the first nitrogen-containing phosphate is a polyphosphate of a heterocyclic $C_3$-$C_6$-, more preferably $C_3$-$C_4$-aryl compound comprising at least one N-atom. It is especially preferred that the first nitrogen-containing phosphate is melamine polyphosphate.

It is preferred that the second nitrogen-containing phosphate is an organic nitrogen-containing diphosphate. More preferably, the second nitrogen-containing phosphate is a diphosphate of a heterocyclic $C_3$-$C_6$-, more preferably $C_3$-$C_4$-alkyl compound comprising at least one N-atom, like two N-atoms. It is especially preferred that the second nitrogen-containing phosphate is piperazine pyrophosphate.

Preferably, the first nitrogen-containing phosphate comprises, or consists of, melamine polyphosphate and/or wherein the second nitrogen-containing phosphate comprises, or consists of, piperazine pyrophosphate.

Preferably, the weight ratio between the first nitrogen-containing phosphate and the second nitrogen-containing phosphate is in the range of 35:75 to 75:35, preferably in the range of 40:60 to 60:40.

The nitrogen-containing flame retardant, in particular those commercially available, may contain further components in minor amounts, like additives, flame retardant synergists and/or carrier medium. Thus it is to be understood that such further components are calculated to the amount of the nitrogen-containing flame retardant.

Preferably, the flame retardant polypropylene composition further comprises
d) glass fibers in an amount of 0.1 to 40.0 wt.% based on the total weight of the flame retardant polypropylene composition.

Preferably, the glass fibers d) are present in an amount of 1.0 to 35.0 wt.%, more preferably 5.0 to 33.0 wt.%, more preferably 10.0 to 30.0 wt.%, most preferably 15.0 to 25.0 wt.%, based on the total weight of the flame retardant polypropylene composition.

Preferably, the amounts of the first heterophasic propylene copolymer a), the second heterophasic propylene copolymer b), the nitrogen-containing flame retardant c) and the glass fibers d) make up at least 90 wt.% of the flame retardant polypropylene composition, more preferably sum up to 100 wt.%.

Preferably, the glass fibers d) are cut glass fibers, also known as short glass fibers (SGF) or chopped strands, and/or long glass fibers (LGF), preferably long glass fibers (LGF) obtained from glass rovings.

It is particularly preferred that the glass fibers d) are short glass fibers (SGF).

The cut or short glass fibers (SGF) within the flame retardant polypropylene composition preferably have a weight average fiber length determined according to FASEP after injection moulding according to EN ISO 1873-2 of the flame retardant polypropylene composition in the range of 0.2 to 1.2 mm, more preferably in the range of 0.25 to 1.0 mm, still more preferably in the range of 0.3 to 0.8 mm.

The initial average length of the short glass fibers (SGF) as provided by the supplier, i.e. the average length of the short fibers (SFG) before melt blending with the components of the flame retardant polypropylene composition, differs from the above mentioned weight average fiber length of the short glass fibers (SGF) within the fiber reinforced composition (C).

The cut or short glass fibers (SGF) used in the flame retardant polypropylene composition preferably have an initial average length in the range of from 2.0 to 10.0 mm, more preferably in the range of 2.3 to 9.0 mm, still more preferably in the range of 2.5 to 8.0 mm, like in the range of 3.0 to 7.0 mm.

The cut or short glass fibers (SGF) used in the flame retardant polypropylene composition preferably have an average diameter of from 5 to 20 $\mu$m, more preferably from 6 to 18 $\mu$m, still more preferably 8 to 16 $\mu$m.

Preferably, the short glass fibers (SGF) have an initial aspect ratio of 125 to 650, preferably of 150 to 500, more preferably 200 to 450. The aspect ratio is the relation between average length and average diameter of the fibers.

The initial average length, average diameter and initial average aspect ratio of the short glass fibers (SGF) refer to the values of the raw material as provided by the supplier.

Adding glass fibers improves the mechanical strength of the inventive flame retardant polypropylene compositions.

Preferably, the flame retardant polypropylene composition further comprises

e) a polypropylene block copolymer in an amount of 0.1 to 15.0 wt.% based on the total weight of the flame retardant polypropylene composition.

Preferably, the polypropylene block copolymer e) is present in an amount of 1.0 to 14.0 wt.%, more preferably 3.0 to 12.0 wt.%, more preferably 5.0 to 11.0 wt.%, most preferably 7.0 to 9.0 wt.%, based on the total weight of the flame retardant polypropylene composition.

Preferably, the amounts of the first heterophasic propylene copolymer a), the second heterophasic propylene copolymer b), the nitrogen-containing flame retardant c), the glass fibers d) and the polypropylene block copolymer e) make up at least 90 wt.% of the flame retardant polypropylene composition, more preferably sum up to 100 wt.%.

Preferably, the polypropylene block copolymer e) has a melt flow rate $MFR_2$ (230°C, 2.16 kg) of from 0.1 to 0.5 g/10 min, more preferably 0.2 to 0.3 g/10 min, determined according to ISO 1133 and/or a density of from 0.880 to 0.910 $g/cm^3$, more preferably 0.890 to 0.910 $g/cm^3$ determined according to ISO 1183.

Preferably, the polypropylene block copolymer e) is copolymer of propylene and an alpha-olefin having 2 or 4 to 8 carbon atoms. The alpha-olefin having 2 or 4 to 8 carbon atoms is preferably ethylene. In other words, the polypropylene block copolymer e) is preferably a propylene-ethylene copolymer.

The alpha-olefin of the polypropylene block copolymer e), preferably of the propylene-ethylene copolymer, is present in an amount preferably of 3.0 to 12.0 wt.%, more preferably 3.5 to 10.0 wt.%, and most preferably 4.0 to 9.0 wt.%, based on the total weight of the polypropylene block copolymer e).

Preferably, the flame retardant polypropylene further comprises

f) a polypropylene polymer functionalized with maleic anhydride in an amount of 0.1 to 5.0 wt.% based on the total weight of the flame retardant polypropylene composition.

Preferably, the polypropylene polymer functionalized with maleic anhydride f) is present in an amount of 0.5 to 3.0 wt.%, more preferably in an amount of 1.0 to 2.0 wt.%, based on the total weight of the flame retardant polypropylene composition.

Preferably, the amounts of the first heterophasic propylene copolymer a), the second heterophasic propylene copolymer b), the nitrogen-containing flame retardant c), the glass fibers d), the polypropylene block copolymer e) and the polypropylene polymer functionalized with maleic anhydride f) make up at least 90 wt.% of the flame retardant polypropylene composition, more preferably sum up to 100 wt.%.

Preferably, the polypropylene polymer functionalized with maleic anhydride f) has a melt flow rate $MFR_2$ (230°C, 2.16 kg) of from 80 to 150 g/10 min determined according to ISO 1133.

The maleic anhydride is present in an amount of preferably 1.2 to 2 wt.%, more preferably 1.3 to 1.5 wt.%, based on the total weight of the polypropylene polymer functionalized with maleic anhydride f).

Preferably, the flame retardant polypropylene composition further comprises

g) an additive.

The additive can also be a mixture of two or more additives differing from each other. Typical additives are acid scavengers, antioxidants, light stabilizers, slip agents, anti-scratch agents, dispersing agents, processing aids, lubricants. Preferably, the additive comprises one or more antioxidant(s). The antioxidant preferably comprises a phosphorous containing antioxidant and/or a sterically hindered phenol antioxidant. For the sake of clarity only, the carbon black comprised in the flame retardant polypropylene composition according to the invention is not considered as "additive".

Such additives are commercially available and for example described in "Plastic Additives Handbook", 6th edition 2009 of Hans Zweifel (pages 1141 to 1190).

Furthermore, the term "additive" according to the present invention also includes carrier materials, in particular polymeric carrier materials. Any polymer being a carrier material for the additive is not calculated to the amount of the respective additive. The polymeric carrier material of the additive is a carrier polymer to ensure a uniform distribution in the flame retardant polypropylene composition of the invention. The polymeric carrier material is not limited to a particular polymer. The polymeric carrier material may be ethylene homopolymer, ethylene copolymer obtained from ethylene and $\alpha$-olefin comonomer such as $C_3$ to $C_8$ alpha-olefin comonomer, propylene homopolymer and/or propylene copolymer obtained from propylene and $\alpha$-olefin comonomer such as ethylene and/or $C_4$ to $C_8$ alpha-olefin comonomer. It is preferred that the polymeric carrier material does not contain monomeric units derivable from styrene or derivatives thereof.

Preferably, the additive is present in an amount of from 0.01 to 5.0 wt.%, more preferably 0.1 to 3.5 wt.%, more preferably 0.2 to 2.0 wt.%, most preferably 0.3 to 1.0 wt.%, based on the total weight of the flame retardant polypropylene composition.

The present invention provides a flame retardant polypropylene composition, optionally comprising glass fibers, with laser-welding capability. Laser-welding capability means that the composition must be laser transparent. For the present invention, a minimum of 13.00% laser transmission is required for a material to be allowing enough laser energy through and render it "laser transparent". Otherwise, if the laser transmission is below 12.50% or below 12.00% or below 10.00%, the material is considered "laser intransparent". Laser transparency is determined as described herein below.

Preferably, the flame retardant polypropylene composition does not comprise carbon black and/or does not comprise colorants or pigments, provided that the carbon black and/or the colorants or pigments are laser intransparent. More preferably, the flame retardant polypropylene composition does not comprise substances which are laser intransparent.

Carbon black is preferably in the form of a masterbatch, such as a masterbatch comprising 40 wt.% carbon black. Carbon black masterbatches are commercially available. Carbon black and/or colorants or pigments usually absorb laser light and would thus render the flame retardant polypropylene composition laser intransparent. However, carbon black and/or colorants or pigments may be present in small amounts. It is preferred that the flame retardant polypropylene composition does not contain carbon black and/or colorants or pigments in amounts exceeding 0.5 wt.%, more preferably 0.1 wt.%, still more preferably 0.01 wt.%, and most preferably 0.001 wt.%.

Of course, a laser transparent colorant and/or a laser transparent pigment may be present in the flame retardant polypropylene composition. Preferably, the flame retardant polypropylene composition comprises a laser transparent colorant and/or laser transparent pigment. The laser transparent colorant and/or laser transparent pigment are preferably present in an amount of 0.001 to 5 wt.%, more preferably 0.01 to 1 wt.%, most preferably 0.1 to 0.5 wt.%, based on the total weight of the flame retardant polypropylene composition. An example for a laser transparent pigment is Graphtol Black CLN VP6274, commercially available from Clariant.

The invention further provides an article comprising, or consisting of, the flame retardant polypropylene composition according to the invention.

Preferably, the article is a laser welded article.

Preferably, the article or the laser welded article is an automotive article or a home electric appliance article, such as an electric cable insulation, housings of electric devices, containers and parts of power electronic components of automobile parts and home electric appliance parts.

The invention will be further illustrated and described below by means of nonlimiting examples.

**Experimental Part**

**Measurement methods**

Any parameter mentioned above in the detailed description of the invention is measured according to the tests given below.

*a) Melt Flow Rate*

The melt flow rate (MFR) was determined according to ISO 1133 and is indicated in g/10 min. The MFR is an indication of the melt viscosity of the polymer. The MFR is determined at 190°C for PE and 230°C for PP and at a loading of 2.16 kg ($MFR_2$).

*b) Density*

Density of the polymer was determined according to ISO 1183-1:2004 (method A) on compression molded specimen prepared according to ISO 17855-2.

*c) Comonomer determination by NMR*

Quantitative nuclear-magnetic resonance (NMR) spectroscopy was used to quantify the comonomer content and comonomer sequence distribution of the polymers.

Quantitative $^{13}C\{^{1}H\}$ NMR spectra were recorded in the solution-state using a Bruker Avance III 400 NMR spectrometer operating at 400.15 and 100.62 MHz for $^{1}H$ and $^{13}C$ respectively. All spectra were recorded using a $^{13}C$ optimized 10 mm extended temperature probehead at 125°C using nitrogen gas for all pneumatics. Approximately 200 mg of material was dissolved in 3 ml of *1,2*-tetrachloroethane-$d_2$ (TCE-$d_2$) along with chromium-(III)-acetylacetonate ($Cr(acac)_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification.

Standard single-pulse excitation was employed without NOE, using an optimized tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra.

Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

For polypropylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

Specifically the influence of regio defects and comonomer on the quantification of the tacticity distribution was corrected for by subtraction of representative regio defect and comonomer integrals from the specific integral regions of the stereo sequences.

The isotacticity was determined at the pentad level and reported as the percentage of isotactic pentad (mmmm) sequences with respect to all pentad sequences:

$$[mmmm] \% = 100 * (\ mmmm\ /\ sum\ of\ all\ pentads\ )$$

The presence of 2,1 erythro regio defects was indicated by the presence of the two methyl sites at 17.7 and 17.2 ppm and confirmed by other characteristic sites.

Characteristic signals corresponding to other types of regio defects were not observed (Resconi, L., Cavallo, L., Fait, A., Piemontesi, F., Chem. Rev. 2000, 100, 1253).

The amount of 2,1 erythro regio defects was quantified using the average integral of the two characteristic methyl sites at 17.7 and 17.2 ppm:

$$P_{21e} = (\ I_{e6} + I_{e8}\ ) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio defects:

$$P_{total} = P_{12} + P_{21e}$$

The mole percent of 2,1 erythro regio defects was quantified with respect to all propene:

$$[21e]\ mol\% = 100 * (\ P_{21e} / P_{total}\ )$$

For copolymers characteristic signals corresponding to the incorporation of ethylene were observed (Cheng, H. N., Macromolecules 17 (1984), 1950).

With regio defects also observed (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) correction for the influence of such defects on the comonomer content was required.

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This

method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E\ [wt.\%] = 100 * (fE * 28.06) / ((fE * 28.06) + ((1\text{-}fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

*d) Intrinsic viscosity (IV)*

The intrinsic viscosity of propylene homopolymers and copolymers was measured according to DIN ISO 1628/1, October 1999 (in Decalin at 135 °C).

e) *Xylene cold solubles* (*XCS, wt.*%)

The content of the xylene cold solubles (XCS) was determined at 25 °C according ISO 16152; first edition; 2005-07-01.

*f) Laser welding*

For laser welding, the specimen types used in each case were quadratic injection moulded specimens (60x60 mm$^2$) with thickness given in Table 2.

Pairs of laser transparent and laser intransparent compositions were used. The laser intransparent composition used was a propylene composition comprising 52.35 wt.% of a heterophasic propylene copolymer, 25 wt.% carbon black, 20 wt.% glass fibers and the remainder being additives, and had a laser transparency of 0.00%, i.e. the composition was fully laser intransparent or absorbent. The laser beam went through the laser-transparent composition and welded the laser transparent composition onto the laser absorbent composition. The welding seam had a width of 1.3 mm, and the welding time was 4.97 s. The laser welding was performed by a Panasonic Yb (Ytterbium) fiber laser system VL-W1A00, operating at a wavelength λ=1070 nm, class 4, continuous waveform oscillation.

**Materials**

The following materials were used for preparing the inventive example (IE) of the flame retardant polypropylene composition.

AO is a mixture of 50% of a phosphorous containing antioxidant (CAS-no. 31570-04-4) and 50% of a sterically hindered phenol antioxidant (CAS-no. 6683-19-8) and is commercially available as Kinox B25G from HPL Additives Ltd.

FR a the nitrogen-containing flame retardant comprising 60 to 65 wt.% of piperazine pyrophosphate and 35 to 40 wt.% melamine polyphosphate.

GF are chopped glass fibers having a fiber diameter of 13.0 μm (ISO 3344) and a fibre length of 3.0 mm, commercially available from Johns Manville.

PP HECO 1 is a heterophasic polypropylene copolymer having a density of 905 kg/m$^3$ (ISO 1183) and a MFR$_2$ of 50 g/10 min (ISO 1133). PP HECO 1 was produced as "HECO 1" disclosed in the experimental part and Table 1 of WO2015113907.

PP HECO 2 is a heterophasic polypropylene copolymer having a density of 905 kg/m$^3$ determined according to ISO 1183, and was produced using the Borstar® process and the catalyst was prepared as disclosed for Inventive Example 1 in WO 2016/055361. Polymerization conditions are given in Table A below. The obtained polymer was compounded with 0.80 wt.% talc (type Steamic T1 CA of Imerys, France), 0.30 wt.% GMS 90 (CAS 31566-31-1, Dimodan HP-FF of Danisco A/S, Denmark), 0.05 wt.% Pentaerythrityl-tetrakis(3-(3',5'-di-tert. butyl-4-hydroxyphenyl)-propionate (CAS 6683-19-8, Irganox 1010 of BASF SE, Germany), 0.10 wt.% Tris (2,4-di-t-butylphenyl) phosphite (CAS 31570-04-4, Irgafos 168 of BASF SE, Germany), 0.050 wt.% Ca-Stearate (CAS 1592-23-0, Ceasit FI of Baerlocher GmbH, Germany).

**Table A** Polymerization conditions and properties

| **Prepoly** | | |
|---|---|---|
| Co/ED | mol/mol | 7 |
| Co/Ti | mol/mol | 390 |
| Temperature | °C | 28 |
| Residence time | min | 15 |
| **Loop** | | |
| Temperature | °C | 75 |
| Pressure | kPa | 5500 |
| Split | wt.% | 43 |
| Feed H2/C3 | mol/kmol | 36.7 |
| Feed C2/C3 | mol/kmol | 0.0 |
| C2 (Loop) | wt.% | 0.0 |
| MFR | g/10min | 511 |
| **GPR1** | | |
| Temperature | °C | 80 |
| Pressure | kPa | 2600 |
| Split | wt.% | 37 |
| Feed H2/C3 | mol/kmol | 203 |
| Feed C2/C3 | mol/kmol | 0,0 |
| MFR (GPR1) | g/10min | 339 |
| MFR in GPR1 | g/10min | 210 |
| C2 (GPR1) | wt.% | 0.0 |
| C2 in GPR1 | wt.% | 0.0 |
| XCS | wt.% | 2.0 |
| **GPR2** | | |
| Temperature | °C | 75 |
| Pressure | kPa | 2100 |
| Feed C2/C3 | mol/kmol | 119 |
| Feed H2/C2 | mol/kmol | 172 |
| C2 in GPR2 | wt.% | 66 |

(continued)

| GPR2 | | |
|---|---|---|
| Split | wt.% | 13 |
| MFR | g/10min | 100 |
| **Pellet** | | |
| XCS | wt.% | 21.5 |
| C2(total) | wt.% | 8.6 |
| C2(XCS) | wt.% | 35.8 |
| iV(XCS) | dl/g | 3.1 |
| MFR | g/10min | 100 |
| Tm | °C | 165 |
| Tc | °C | 128 |

PP 1 is a propylene block copolymer having a $MFR_2$ of 0.22 g/10 min (ISO 1133) and a density of 900 kg/m$^3$ (ISO 1183), and corresponds to Example 8 (comparative) of WO 99/24479. The properties are given in Tables 2 to 5 under the heading "Reference".

PP 2 is a polypropylene polymer functionalized with maleic anhydride having an $MFR_2$ of >80 g/10 min (ISO 1133), commercially available as Scona TPPP 8112 GA from Byk.

The following materials were used for preparing the comparative examples (CE).

PP HECO 3 is a random heterophasic polypropylene copolymer and was produced using the Borstar® process and the catalyst was prepared as disclosed for Inventive Example 1 in WO 2016/055361. Polymerization conditions are given in Table B below. The obtained polymer was compounded with 0.50 wt.% talc (type Steamic T1 CA of Imerys, France), 0.025 wt.% Pentaerythrityl-tetrakis(3-(3',5'-di-tert. butyl-4-hydroxyphenyl)-propionate (CAS 6683-19-8, Irganox 1010 of BABF SE, Germany), 0.050 wt.% Tris (2,4-di-t-butylphenyl) phosphite (CAS 31570-04-4, Irgafos 168 of BASF SE, Germany), and 0.040 wt.% Ca-Stearate (CAS 1592-23-0, Ceasit FI of Baerlocher GmbH, Germany).

**Table B** Polymerization conditions and properties

| Prepoly | | |
|---|---|---|
| TEAL/ donor D | mol/mol | 10 |
| TEAL/Ti | mol/mol | 250 |
| Temperature | °C | 30 |
| Residence time | min | 5 |
| **Loop** | | |
| Temperature | °C | 75 |
| Pressure | kPa | 5000 |
| Split | wt.% | 43 |
| Feed H2/C3 | mol/kmol | 11.50 |
| Feed C2/C3 | mol/kmol | 0,0 |
| C2 (Loop) | wt.% | 0,0 |
| MFR | g/10min | 80 |
| **GPR1** | | |
| Temperature | °C | 80 |
| Pressure | kPa | 2800 |
| Split | wt.% | 40 |
| Feed H2/C3 | mol/kmol | 87.0 |

(continued)

| GPR1 | | |
|---|---|---|
| Feed C2/C3 | mol/kmol | 0,0 |
| MFR (GPR1) | g/10min | 80 |
| MFR in GPR1 | g/10min | 80 |
| C2 (GPR1) | wt.% | 0,0 |
| C2 in GPR1 | wt.% | 0,0 |
| XCS | wt.% | 2.0 |
| GPR2 | | |
| Temperature | °C | 80 |
| Pressure | kPa | 2650 |
| Feed C2/C3 | mol/kmol | 570 |
| Feed H2/C2 | mol/kmol | 120 |
| C2 in GPR2 | wt.% | 56.9 |
| Split | wt.% | 14 |
| MFR | g/10min | 42.0 |
| Pellet | | |
| XCS | wt.% | 16.0 |
| C2(total) | wt.% | 8.0 |
| C2(XCS) | wt.% | 38.0 |
| iV(XCS) | dl/g | 3.1 |
| MFR | g/10min | 42 |
| Tm | °C | 165 |
| Tc | °C | 129 |

CE2 is a co-extruded polypropylene and commercially available as Icosolar CPO 3G from Isovoltaic.

**Examples**

The flame retardant polypropylene composition IE1 was prepared by melt blending the polypropylene polymers in a co-rotating twin screw extruder with the nitrogen-containing flame retardant and further components as shown in Table 1 below.

**Table 1** Composition of the flame retardant polypropylene compositions IE1 and CE1

| Component, wt.% | IE1 | CE1 |
|---|---|---|
| PP HECO 1 | 27.9 | |
| PP HECO 2 | 20.0 | |
| PP 1 | 8.0 | |
| PP 2 | 1.5 | |
| PP HECO 3 | | 100 |
| FR | 22.5 | |
| GF | 20.0 | |
| AO | 0.1 | |

In Table 2 below the laser transmission is reported as the key parameter rendering a composition "transparent" or "intransparent". A minimum of 13.00% transmission is required for a material to be allowing enough laser energy through and render it "laser transparent".

**Table 2** Laser transmission results

|  | Thickness (mm) | Transmission (%) | Laser behaviour |
|---|---|---|---|
| IE1 | 2 | 24.10±0.01 | transparent |
| CE1 | 2 | 59.80±0.01 | transparent |
| CE2 | 0.3 | 15.50±0.02 | transparent |

As can be seen from Table 2, all examples are laser transparent. IE1 has the same sample thickness as CE1. In contrast to CE1, IE1 comprises a flame retardant as well as glass fibers but surprisingly shows a good laser transparency.

**Claims**

1. A flame retardant polypropylene composition comprising

   a) a first heterophasic propylene copolymer in an amount of 15.0 to 35.0 wt.% based on the total weight of the flame retardant polypropylene composition,
   b) a second heterophasic propylene copolymer in an amount of 10.0 to 30.0 wt.% based on the total weight of the flame retardant polypropylene composition,
   c) a nitrogen-containing flame retardant in an amount of 10.0 to 40.0 wt.% based on the total weight of the flame retardant polypropylene composition,

   wherein the second heterophasic propylene copolymer b) has a higher melt flow rate $MFR_2$ (230°C, 2.16 kg) determined according to ISO 1133 than the first heterophasic propylene copolymer a).

2. The flame retardant polypropylene composition according to claim 1, further comprising
   d) glass fibers in an amount of 0.1 to 40.0 wt.% based on the total weight of the flame retardant polypropylene composition.

3. The flame retardant polypropylene composition according to any one of claims 1 or 2, further comprising
   e) a polypropylene block copolymer in an amount of 0.1 to 15 wt.% based on the total weight of the flame retardant polypropylene composition.

4. The flame retardant polypropylene composition according to any one of claims 1 or 2, further comprising
   f) a polypropylene polymer functionalized with maleic anhydride in an amount of 0.1 to 5.0 wt.% based on the total weight of the flame retardant polypropylene composition.

5. The flame retardant polypropylene composition according to any one of the preceding claims, wherein the first heterophasic propylene copolymer a) has a melt flow rate $MFR_2$ (230°C, 2.16 kg) of from 0.5 to 60 g/10 min determined according to ISO 1133 and/or a density of from 0.880 to 0.910 g/cm$^3$ determined according to ISO 1183.

6. The flame retardant polypropylene composition according to any one of the preceding claims, wherein the second heterophasic propylene copolymer b) has a melt flow rate $MFR_2$ (230°C, 2.16 kg) of from 65 to 120 g/10 min determined according to ISO 1133 and/or a density of from 0.880 to 0.910 g/cm$^3$ determined according to ISO 1183.

7. The flame retardant polypropylene composition according to any one of the preceding claims, wherein the first heterophasic propylene copolymer a) has an ethylene content of from 7.0 to 13.0 wt.% based on the total weight of the first heterophasic propylene copolymer and/or wherein the second heterophasic propylene copolymer b) has an ethylene content of from 8.0 to 12.0 wt.% based on the total weight of the second heterophasic propylene copolymer.

8. The flame retardant polypropylene composition according to any one of claims 3 to 7, wherein the polypropylene block copolymer e) has a melt flow rate $MFR_2$ (230°C, 2.16 kg) of from 0.1 to 0.5 g/10 min determined according to ISO 1133 and/or a density of from 0.880 to 0.910 g/cm$^3$ determined according to ISO 1183.

9. The flame retardant polypropylene composition according to any one of the preceding claims, wherein the nitrogen-containing flame retardant c) comprises at least one nitrogen-containing phosphate.

10. The flame retardant polypropylene composition according to any one of the preceding claims, wherein the nitrogen-containing flame retardant c) comprises a phosphate of heterocyclic $C_3$-$C_6$ alkyl or -aryl compounds comprising at least one N-atom.

11. The flame retardant polypropylene composition according to any one of the preceding claims, wherein the nitrogen-containing flame retardant c) comprises a first nitrogen-containing phosphate and a second nitrogen-containing phosphate different from the first nitrogen-containing phosphate.

12. The flame retardant polypropylene composition according to claim 11, wherein the first nitrogen-containing phosphate comprises, or consists of, melamine polyphosphate and/or wherein the second nitrogen-containing phosphate comprises, or consists of, piperazine pyrophosphate.

13. The flame retardant polypropylene composition according to any one of the preceding claims, wherein the nitrogen-containing flame retardant c) is free of halogens.

14. The flame retardant polypropylene composition according to any one of the preceding claims, wherein the flame retardant polypropylene composition does not comprise carbon black.

15. Article comprising, or consisting of, the flame retardant polypropylene composition according to any one of claims 1 to 14.

Europäisches
Patentamt

European
Patent Office

Office européen
des brevets

# EUROPEAN SEARCH REPORT

Application Number

**EP 23 18 4501**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2020/064752 A1 (SABIC GLOBAL TECHNOLOGIES BV [NL]) 2 April 2020 (2020-04-02) * table 3 ex 11-12 * | 1-15 | INV. C08K5/3492 C08L23/12 |
| A | US 2019/264002 A1 (WEN LIANG [NL] ET AL) 29 August 2019 (2019-08-29) * table 3 examples 27, 28, 32 * | 1-15 | |
| A | WO 2023/117729 A1 (SABIC GLOBAL TECHNOLOGIES BV [NL]) 29 June 2023 (2023-06-29) * table 2ex 6-7 * | 1-15 | |
| A | EP 3 712 206 A2 (LG CHEMICAL LTD [KR]; LG HAUSYS LTD [KR]) 23 September 2020 (2020-09-23) * table 2-3, ex 1-3 * | 1-15 | |

TECHNICAL FIELDS
SEARCHED      (IPC)

C08K
C08L

The present search report has been drawn up for all claims

| Place of search | Date of completion of the search | Examiner |
|---|---|---|
| Munich | 29 November 2023 | Ritter, Nicola |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 18 4501

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2023

| Patent document cited in search report | | Publication date | Patent family member(s) | | Publication date |
|---|---|---|---|---|---|
| WO 2020064752 | A1 | 02-04-2020 | CN | 112739757 A | 30-04-2021 |
| | | | EP | 3856829 A1 | 04-08-2021 |
| | | | US | 2021355287 A1 | 18-11-2021 |
| | | | WO | 2020064752 A1 | 02-04-2020 |
| US 2019264002 | A1 | 29-08-2019 | CN | 107663332 A | 06-02-2018 |
| | | | CN | 109844003 A | 04-06-2019 |
| | | | EP | 3491056 A1 | 05-06-2019 |
| | | | US | 2019264002 A1 | 29-08-2019 |
| | | | WO | 2018019762 A1 | 01-02-2018 |
| WO 2023117729 | A1 | 29-06-2023 | NONE | | |
| EP 3712206 | A2 | 23-09-2020 | CN | 111433278 A | 17-07-2020 |
| | | | EP | 3712206 A2 | 23-09-2020 |
| | | | JP | 7069508 B2 | 18-05-2022 |
| | | | JP | 2021505731 A | 18-02-2021 |
| | | | KR | 20190067611 A | 17-06-2019 |
| | | | US | 2021230413 A1 | 29-07-2021 |
| | | | WO | 2019112362 A2 | 13-06-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015113907 A
- WO 2016055361 A

- WO 9924479 A

**Non-patent literature cited in the description**

- **HANS ZWEIFEL**. Plastic Additives Handbook. 2009, 1141-1190
- **SINGH, G.** ; **KOTHARI, A.** ; **GUPTA, V.** *Polymer Testing*, 2009, vol. 28 (5), 475
- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun*, 2007, vol. 28, 1128
- **CHENG, H. N.** *Macromolecules*, 1984, vol. 17, 1950
- **RESCONI, L.** ; **CAVALLO, L.** ; **FAIT, A.** ; **PIEMONTESI, F.** *Chem. Rev.*, 2000, vol. 100, 1253

- **WANG, W-J.** ; **ZHU, S.** *Macromolecules*, 2000, vol. 33, 1157
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromoleucles*, 1997, vol. 30, 6251
- **KAKUGO, M.** ; **NAITO, Y.** ; **MIZUNUMA, K.** ; **MIYATAKE, T.** *Macromolecules*, 1982, vol. 15, 1150
- *CHEMICAL ABSTRACTS*, 31570-04-4
- *CHEMICAL ABSTRACTS*, 6683-19-8
- *CHEMICAL ABSTRACTS*, 31566-31-1
- *CHEMICAL ABSTRACTS*, 1592-23-0